Europäisches Patentamt

European Patent Office

Office européen des brevets

(11) Publication number: **0 284 750**
**A2**

# EUROPEAN PATENT APPLICATION

(21) Application number: **88102084.6**

(22) Date of filing: **12.02.88**

(51) Int. Cl.⁴ **G11B 19/20 , G11B 17/02**

(30) Priority: **13.02.87 US 14677**

(43) Date of publication of application:
**05.10.88 Bulletin 88/40**

(84) Designated Contracting States:
**BE DE FR GB**

(71) Applicant: **SIMS VIBRATION DYNAMICS, INC.**
**17724 - 15th Avenu N.E.**
**Seattle Washington 98155(US)**

(72) Inventor: **Sim, Steven C.**
**9111 S. W. 188th**
**Edmonds Washington 98020(US)**

(74) Representative: **Patentanwälte Grünecker,**
**Kinkeldey, Stockmair & Partner**
**Maximilianstrasse 58**
**D-8000 München 22(DE)**

(54) **Stabilizing ring for an optical disc.**

(57) A stabilizing ring (10) having a circular body with an adhesive lower surface (20) for adhering adjacent to the outer edge (28) of a compact disc (12). A positioning device (30) has a hub (34) with a projection (38) extending from the center of the hub (34) for concentrically aligning the stabilizing ring (10) with the compact disc (12). The stabilizing ring (10) has a uniform mass distribution with an approximate mass of 2.8 grams.

FIG.1

EP 0 284 750 A2

## STABILIZING RING FOR AN OPTICAL DISC

### Technical Field

The present invention relates to optical discs, and, in particular, to a stabilizing ring for mechanically stabilizing an optical disc to improve playback performance.

### Background of the Invention

An optical disc is an information storage device that is read by a laser beam as it is rotated at high speeds in an optical disc player. Although reference will be made to compact discs used for audio recordings, the invention as described herein is applicable to all optical discs. Compact discs are constructed of a polyurethane material. Due to the nature of the material, an uneven weight distribution can exist across the compact disc. As a result, the compact disc may develop a rotational tilt or vertical flutter when subjected to the high rotational speeds of a compact disc player. This rotational tilt increases the amount of movement that the servo system must use to correct positioning errors, and produces a distortion in the output of the compact disc player that interferes with the audio reproduction.

One device for damping the rotational tilt consists of a disc made of fiberglass material having approximately the same dimensions as the compact disc. This damping disc is placed on the inactive (upper) side of the compact disc and is held in place by the clamping mechanism of the compact disc player when the compact disc is placed therein. A disadvantage of this method is the damping disc is not affixed to the compact disc and is subject to shifting its position as it rotates, thus itself causing rotational tilt. Another disadvantage is the damping disc can interfere with the clamping mechanism of the compact disc player and interfere with the operation of or cause damage to the compact disc player. Furthermore, this method does not prevent rotational tilt; it only dampens it, thus still allowing some distortion to occur in the output of the compact disc player. These and other disadvantages are overcome in the present invention.

### Summary of the Invention

The present invention provides a stabilizing ring for an optical disc such as a compact audio disc. The stabilizing ring comprises a circular body in the shape of a ring and has a uniform mass distribution along a circumferential direction. An attachment means attaches the body of the stabilizing ring adjacent the outer edge of the optical disc. Preferably, the body has an outside diameter approximately equal to the outside diameter of the optical disc.

In accordance with other aspects of the invention, the stabilizing ring body has a mass in the range of 2.0 to 3.6 grams.

In accordance with further aspects of the invention, the body has a uniform thickness of approximately 1/32 inch. In addition, the body has a width of less than one-half the outside diameter of the optical disc, and preferably a width of approximately 1/4 inch.

In accordance with still further aspects of the invention, the attachment means preferably comprises adhesive formed on one side of the body. Alternatively, the attachment means may comprise integrally forming the stabilizing ring body with the optical disc.

In accordance with still further aspects of this invention, a positioning device used for positioning the stabilizing ring on the compact disc is provided. The positioning device comprises a hub having a circular outside edge with an outside diameter substantially equal to the diameter of the inside edge of the stabilizing ring. A projecting portion is formed at the center of the hub for concentrically aligning the circular outside edge of the hub with the optical disc when the hub is placed on the optical disc such that when the stabilizing ring is placed around the circular outside edge, the stabilizing ring will be concentrically aligned with the optical disc.

In accordance with another aspect of the invention, the hub of the positioning device has a stepped portion projecting from the outside edge for supporting a stabilizing ring placed around the outside edge of the hub. Preferably, the stepped portion is constructed to support the stabilizing ring so that the upper surface of the stabilizing ring is at or above the outside edge of the hub, to enable an optical disc placed on the hub to contact the upper surface of the stabilizing ring.

## Brief Description of the Drawings

The foregoing and other advantages and features of this invention will become more readily appreciated as the same become better understood by reference to the following detailed description when taken in conjunction with the accompanying drawings wherein:

Figure 1 is an isometric view of a preferred embodiment of the stabilizing ring positioned above a compact disc;

Figure 2 is an isometric view showing the stabilizing ring attached to the compact disc;

Figure 3 is a top plan view of the embodiment of Figure 2;

Figure 4 is an isometric view from below of one preferred embodiment of a positioning device positioned above the compact disc and below the stabilizing ring; and

Figure 5 is a cross-sectional view of a second preferred embodiment of the positioning device.

## Detailed Description of the Preferred Embodiment

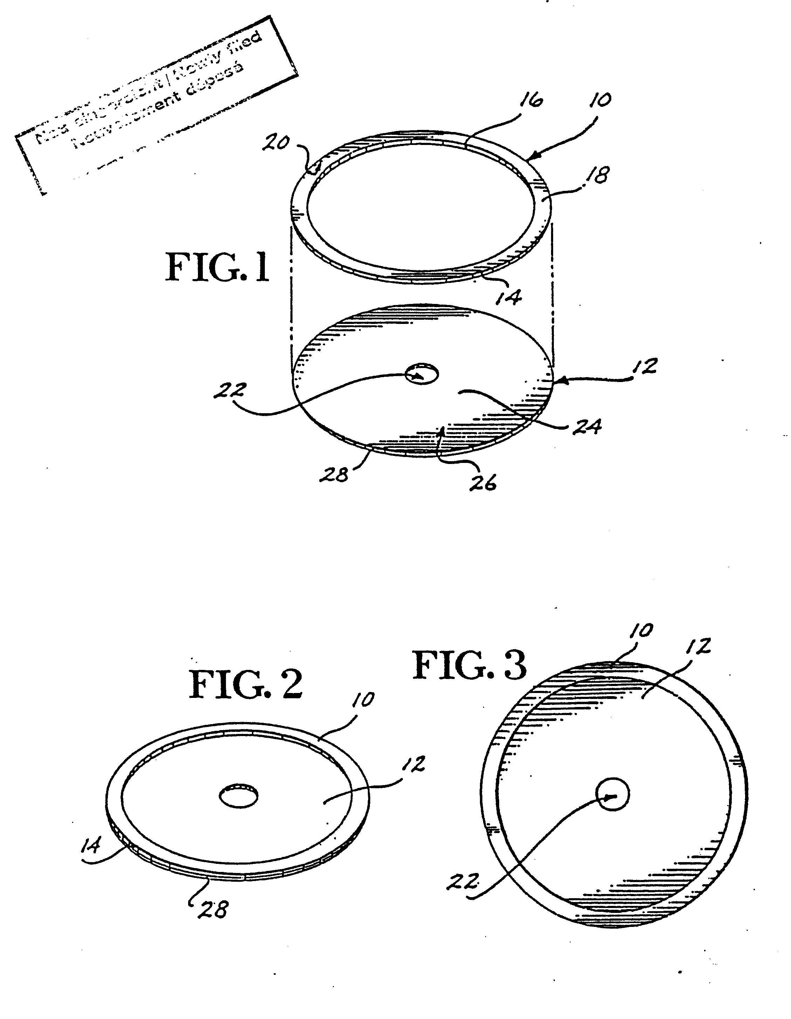

Figure 1 shows a stabilizing ring 10 formed in accordance with the present invention positioned above a compact disc 12. The stabilizing ring 10 has a circular outside edge 14, a circular inside edge 16, an upper surface 18 and a lower surface 20.

The compact disc 12 may be in the form of any commercially available compact disc, or any other optical disc. Typically, the compact disc 12 will have an opening 22 formed in the center thereof. When the compact disc 12 is inserted into a compact disc player (not shown), a spindle will be inserted through the opening 22 and a clamping mechanism will contact the inactive surface 24. Sound recordings are read off the active surface 26 of the compact disc 12 by a laser sensor in the compact disc player.

Referring to Figure 2, after the stabilizing ring 10 and the compact disc 12 are concentrically aligned, the stabilizing ring 10 is placed on the inactive surface 24 of the compact disc 12 and is securely affixed to the compact disc 12 adjacent the outer edge 28 of the compact disc. Preferably, the stabilizing ring 10 is formed with the lower surface 20 comprised of adhesive material. When the compact disc 12 comes in contact with the adhesive lower surface 20, the stabilizing ring 10 is firmly held in place on the compact disc 12 by the adhesive to maintain concentric alignment. Alternatively, the stabilizing ring 10 may be integrally formed with the compact disc 12.

Stabilizing ring 10 may be formed of 90 durometer neoprene or of any other suitable material. In applications where the stabilizing ring 10 is integrally formed with the compact disc 12, the stabilizing ring 10 could be constructed of the same material as the compact disc 12. The stabilizing ring 10 must have enough mass to generate a reaction force to the centripetal force of the spinning disc to hold the compact disc 12 in its plane of rotation and prevent rotational tilt or vertical fluttering of the compact disc 12. The mass of the stabilizing ring 10 is preferably in the range of 2.0 to 3.6 grams for compact discs having an outside diameter of Approximately 4 11/16 inches. A mass greater than appoximately 3.6 grams has been found to create distortions, and a mass less than approximately 2.0 grams is comparatively ineffective in preventing rotational tilt or vertical flutter.

The stabilizing ring 10 should have a uniform mass distribution along the circumferential direction. One way to achieve a uniform mass distribution and avoid interference with the player is to construct the stabilizing ring 10 to have a uniform thickness of approximately 1/32 inch. In addition, the width of the stabilizing ring 10, as measured between the outside edge 14 and the inside edge 16, is preferably 1/4 inch. Ideally, the outside diameter of the outside edge 14 is slightly less than the outside diameter of the compact disc 12, as is shown in Figure 3, to allow for manufacturing tolerances.

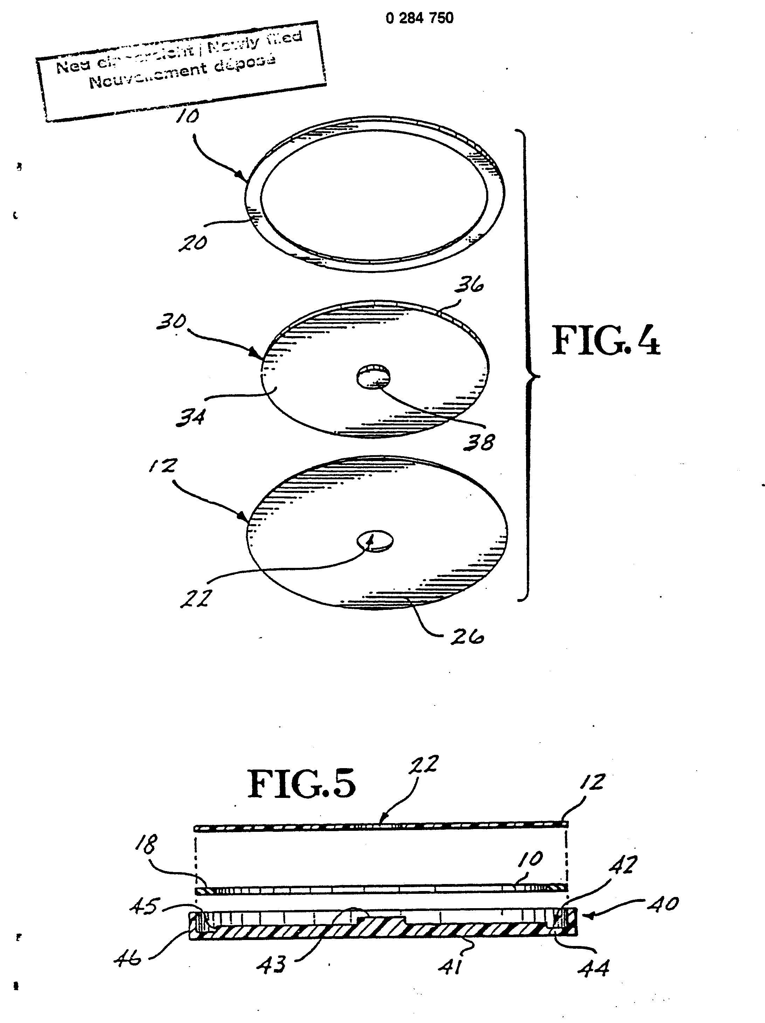

In addition to having a uniform mass distribution and proper dimensions, the stabilizing ring 10 must be concentrically positioned on the compact disc 12. Figure 4 shows a positioning device 30 positioned between the compact disc 12 and the stabilizing ring 10. The positioning device 30 has a disc-shaped hub 34 with a circular outside edge 36. The outside diameter of the hub 34 is substantially equal to the inside diameter of the stabilizing ring 10, to allow the stabilizing ring 10 to be slid over the outside edge 36 of the positioning device 30. A projection 38 depends downward from the center of the hub 34 and is sized and shaped to fit within the opening 22 in the center of the compact disc 12. The projection 38 concentrically aligns the positioning device 30 with the compact disc 12 so that when the stabilizing ring 10 is placed around the outside edge 36 of the positioning device 30, it will be concentrically aligned with the compact disc 12. Pressure is then applied to cause the stabilizing ring to adhere, to the compact disc, and the positioning device is removed.

Figure 5 shows an alternative embodiment wherein the positioning device 40 comprises a hub 41 and a projection 43 that may be identical to the corresponding elements shown in Figure 4, and an additional channel 42 formed circumferentially about the outside edge 45 of hub 41. The channel 42 is formed by a stepped portion 44 projecting outward from the outside edge 45, and a band 46 extending upward from the outer edge of stepped portion 44. The inside diameter of band 46 is substantially equal to the outside diameter of compact disc 12. The stepped portion 44 supports the stabilizing ring 10 around the outside edge 45 and is preferably constructed to support the stabilizing ring 10 so that the adhesive upper surface 18 is slightly above the upper surface of hub 41. This enables a compact disc 12 placed on the hub 41 to contact the adhesive upper surface 18 of the stabilizing ring 10. The positioning device 40 is preferably constructed to have the projection 43, the stepped portion 44 and band 46 integrally formed with the hub 41, and may be constructed of any suitable material.

Although a preferred embodiment of the invention has been illustrated and described, it will be appreciated that various changes can be made therein without departing from the spirit and scope of the invention. For example, the projection 38 may have other than a circular shape, such as a triangle or a rectangle, that is suitably dimensioned to fit within the opening 22 and prevent lateral movement of the positioning device 40 relative to the compact disc 12. Consequently, the invention can be practiced otherwise than as specifically described herein.

**Claims**

1. A stabilizing ring for an optical disc, the disc having an outer edge having an outside diameter and an opening in the center of the disc, the stabilizing ring comprising:

(a) a circular body in the shape of a ring, said body having a uniform mass distribution along a circumferential direction; and

(b) attachment means for attaching said body to the disc adjacent the outer edge of the disc.

2. The stabilizing ring of claim 1 wherein said mass is in the range of 2.0 to 3.6 grams.

3. The stabilizing ring of claim 1 wherein said body has an outside diameter approximately equal to the outside diameter of the disc.

4. The stabilizing ring of claim 3 wherein said body has a uniform thickness.

5. The stabilizing ring of claim 4 wherein said body has a thickness of approximately 1/32 inch.

6. The stabilizing ring of claim 1 wherein said body has a width of less than one-half the outside diameter of the disc.

7. The stabilizing ring of claim 6 wherein the width is approximately 1/4 inch.

8. The stabilizing ring of claim 1 wherein said means for attaching said body to the disc comprises adhesive.

9. The stabilizing ring of claim 8 wherein said body is constructed to have said adhesive formed on one side of said body.

10. The stabilizing ring of claim 1 wherein said body is integrally formed with the disc.

11. A positioning device for positioning a stabilizing ring on an optical disc, the stabilizing ring having an inside edge, an outside edge, and an upper surface, the disc having an outer edge and an opening formed in the center thereof, the positioning device comprising:

(a) a hub having a circular outside edge with an outside diameter that is substantially equal to the diameter of the inside edge of the stabilizing ring; and

(b) a projecting portion at the center of said hub for concentrically aligning said circular outside edge with the disc when said hub is placed on the disc, said projecting portion being sized and shaped for insertion into the opening in the center of the disc and for being held in place in said opening such that when the stabilizing ring is placed around said circular outside edge, the stabilizing ring will be concentrically aligned with the disc.

12. The positioning device of claim 11 wherein said hub has a stepped portion projecting from said outside edge for supporting a stabilizing ring placed around said outside edge of said hub.

13. The positioning device of claim 12 wherein said stepped portion is constructed to support the stabilizing ring so that the upper surface of the stabilizing ring is at or above said outside edge of said hub to enable a disc placed on said hub to contact the upper surface of the stabilizing ring.

14. The positioning device of claim 11 wherein said hub further includes a channel formed on said outside edge, said channel having a bottom projecting outward from said outside edge and an outside wall projecting upward from said bottom, said bottom projecting a sufficient distance from said outside edge to allow the stabilizing ring to lie flat in said channel.

15. The positioning device of claim 14 wherein said channel supports the stabilizing ring so that the upper surface of the stabilizing ring is above said outside edge of said hub to enable a disc placed on said hub to contact the upper surface of the stabilized ring.

## FIG.1

20
16
10
18
14
22
24
12
28
26

## FIG. 2

10
12
14
28

## FIG. 3

10
12
22

FIG. 4

FIG. 5